# EUROPEAN PATENT APPLICATION

(11) **EP 4 431 782 A1**
(43) Date of publication of application: **18.09.2024**
(21) Application number: 22892353.8
(22) Date of filing: 03.08.2022
(51) Int. Cl.: F16L 55/00, C23F 15/00, F16L 58/00

(54) **CONNECTION PART STRUCTURE, CORROSION PREVENTION SYSTEM, DEVICE, AND CORROSION PREVENTION METHOD**

(30) Priority: 12.11.2021 JP 2021185091
(71) Applicant: Sumitomo Chemical Company, Limited, Tokyo 103-6020 (JP)
(72) Inventor: SODEYAMA, Kyosuke, Niihama-shi, Ehime 792-8521 (JP); YOSHINO, Hajime, Niihama-shi, Ehime 792-8521 (JP); UCHIHASHI, Yusuke, Niihama-shi, Ehime 792-8521 (JP)
(74) Representative: Plasseraud IP
(86) International application number: PCT/JP2022/029765
(87) International publication number: WO 2023/084850

(57) **Abstract**

A connection structure (100) in accordance with an aspect of the present invention reduces a possibility that corrosion will occur in a connection part, and includes: at least one supply port (14) through which a corrosion prevention fluid is supplied; and a baffle plate (13) which is located on an inner side of an apparatus or piping. The baffle plate (13) causes a change in flow of each of the corrosion prevention fluid and a corrosion induction fluid so that a fluid which comes in contact with a connection part (P) becomes the corrosion prevention fluid or the corrosion induction fluid that is diluted by the corrosion prevention fluid.

## Description

### Technical Field

The present invention relates to a connection structure in a connection part of an apparatus or piping, a corrosion prevention system, a device which includes the corrosion prevention system, and a corrosion prevention method.

### Background Art

In an apparatus or piping inside which a fluid flows, crevice corrosion and the like may occur in a part in which members constituting the apparatus or the piping are connected to each other.

In order to prevent corrosion in an apparatus or piping, for example, Non-Patent Literature 1 discloses that a material obtained by adding palladium to titanium is effective in preventing crevice corrosion. Non-Patent Literature 2 discloses that it is possible to suppress corrosion by bringing a noble metal, such as gold or platinum, into contact with type 316 stainless steel.

Patent Literature 1 discloses a technique for preventing corrosion by supplying a paste-like or greaselike crevice corrosion inhibitor to a micro crevice formed in a part in which components are joined or formed between the components.

### Citation List

### [Patent Literature]

[Patent Literature 1]
Japanese Patent Application Publication, Tokukaisho, No. 60-67780

### [Non-patent Literature]

[Non-patent Literature 1]
   KOBAYASHI, mineo, "Chitan no sukima fushoku boushi (Prevention of crevice corrosion of titanium)", Boshoku Gijutsu, vol. 35, pp. 538-540, 1986
[Non-patent Literature 2]
   NAKAHARA, masao, et. al., "Anodic Protection Method for Stainless Steel in Contact with Noble Metals in the Concentrated Sulfuric Acid Environment", Zairyo-to-Kankyo, vol. 51, pp. 111-114, 2002

### Summary of Invention

### Technical Problem

However, materials as disclosed in Non-Patent Literatures are expensive, and result in poor economy. A conventional technique as disclosed in Patent Literature 1 has a problem that it is difficult to apply the conventional technique to a high-temperature and high-pressure system in which sealing on a contact surface between components is important, because a corrosion inhibitor is directly supplied to the contact surface between the components.

An object of an aspect of the present invention is to reduce a possibility that corrosion will occur in a connection part of an apparatus or piping inside which a fluid flows and in the vicinity of the connection part.

### Solution to Problem

In order to attain the above object, a connection structure in accordance with an aspect of the present invention is a connection structure which prevents corrosion in a connection part of an apparatus or piping inside which a corrosion induction fluid flows, including: at least one supply port through which a corrosion prevention fluid is supplied; and a baffle plate which is located on an inner side of the apparatus or the piping, wherein the baffle plate causes a change in flow of each of the corrosion prevention fluid and the corrosion induction fluid so that a fluid which comes in contact with the connection part becomes the corrosion prevention fluid or the corrosion induction fluid that is diluted by the corrosion prevention fluid.

A corrosion prevention system in accordance with an aspect of the present invention includes the above connection structure and the corrosion prevention fluid supply device.

A device in accordance with an aspect of the present invention includes the above corrosion prevention system.

A corrosion prevention method in accordance with an aspect of the present invention is a method for preventing corrosion in a connection part of an apparatus or piping inside which a corrosion induction fluid flows, including the steps of: supplying a corrosion prevention fluid; and changing a flow of each of the corrosion prevention fluid and the corrosion prevention fluid so that a fluid which comes in contact with the connection part becomes the corrosion prevention fluid or the corrosion induction fluid that is diluted by the corrosion prevention fluid.

### Advantageous Effects of Invention

An aspect of the present invention makes it possible to reduce a possibility that corrosion will occur in a connection part of an apparatus or piping inside which a corrosion induction fluid flows.

### Brief Description of Drawings

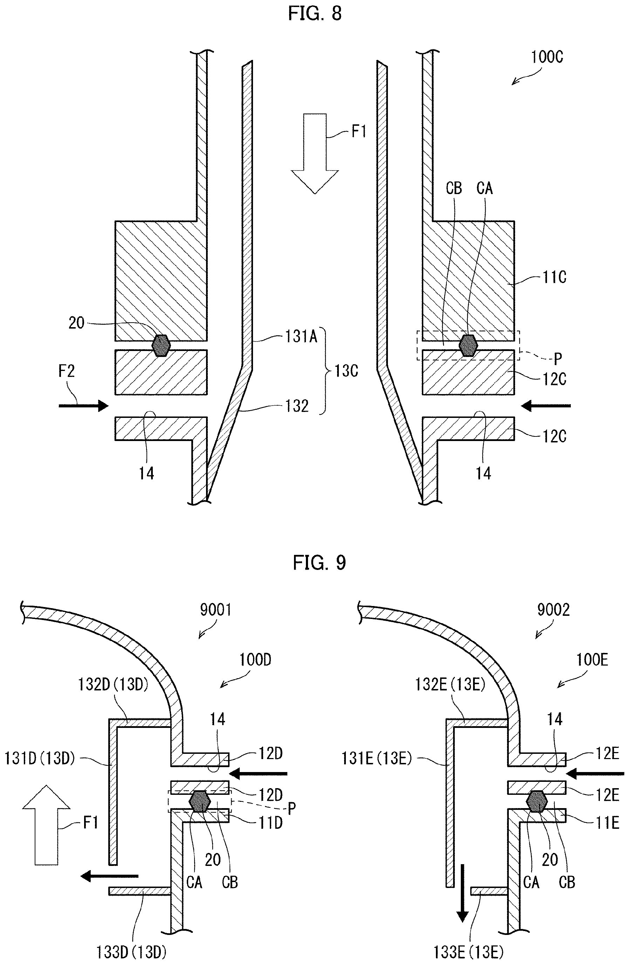

Fig. 1 is a schematic view illustrating configurations of a connection structure, a corrosion prevention system, and a device, in accordance with Embodiment 1 of the present invention.
2001 of Fig. 2 is a cross-sectional view taken from line II-II of Fig. 1, and 2002 of Fig. 2 is a drawing illustrating a variation.
Fig. 3 is cross-sectional views of connection structures which are variations of the connection structure illustrated in Fig. 1.
Fig. 4 is a cross-sectional view of a connection structure in accordance with Embodiment 2.
Fig. 5 is cross-sectional views of connection structures which are variations of the connection structure illustrated in Fig. 4.
Fig. 6 is a cross-sectional view of a connection structure in accordance with Embodiment 3.
Fig. 7 is a cross-sectional view of a connection structure which is a variation of the connection structure in accordance with Embodiment 3.
Fig. 8 is a cross-sectional view of a connection structure in accordance with Embodiment 4.
9001 of Fig. 9 is a partial cross-sectional view of an apparatus including a connection structure in accordance with Embodiment 5. 9002 of Fig. 9 is a partial cross-sectional view of an apparatus including a connection structure which is a variation of the connection structure in accordance with Embodiment 5.

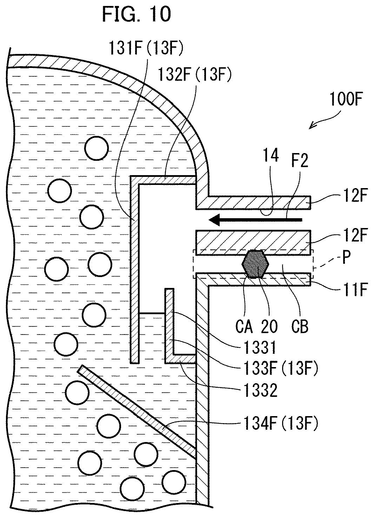

Fig. 10 is a partial cross-sectional view of an apparatus including a connection structure in accordance with Embodiment 6.

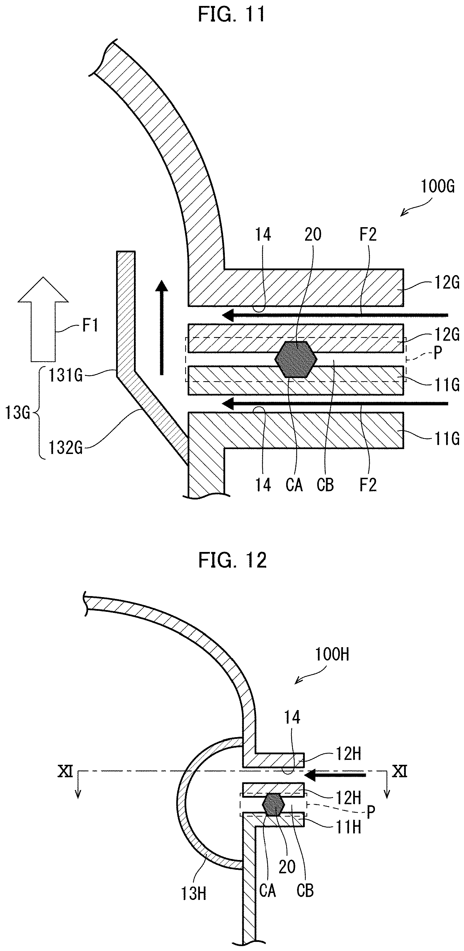

Fig. 11 is a partial cross-sectional view of an apparatus including a connection structure in accordance with Embodiment 7.
Fig. 12 is a partial cross-sectional view of an apparatus including a connection structure in accordance with Embodiment 8.

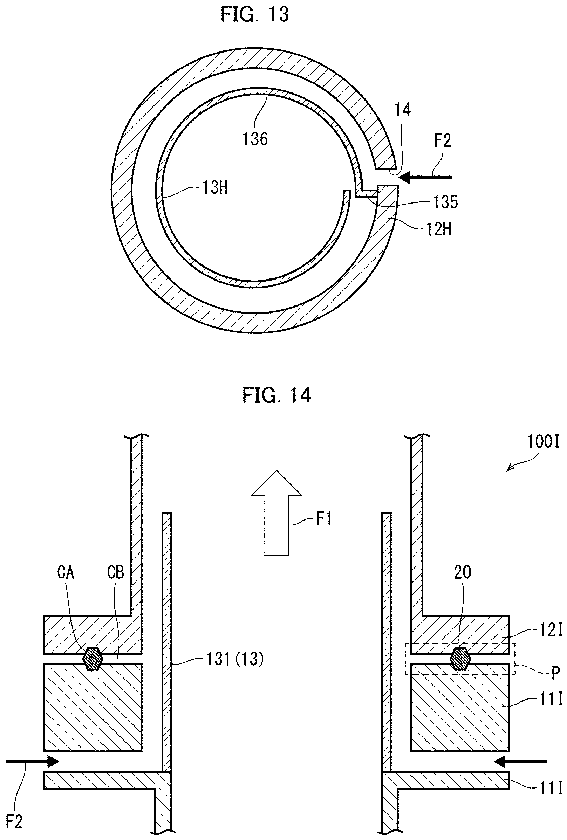

Fig. 13 is a cross-sectional view taken from line XI-XI in Fig. 12.
Fig. 14 is a partial cross-sectional view of an apparatus including a connection structure in accordance with Embodiment 9.

### Description of Embodiments

### Embodiment 1

The following description will discuss an example of a corrosion prevention method in accordance with an aspect of the present invention together with a system used in the corrosion prevention method, with reference to drawings. Note that the accompanying drawings are referred to for description of the present disclosure, and may differ from actual dimensions.

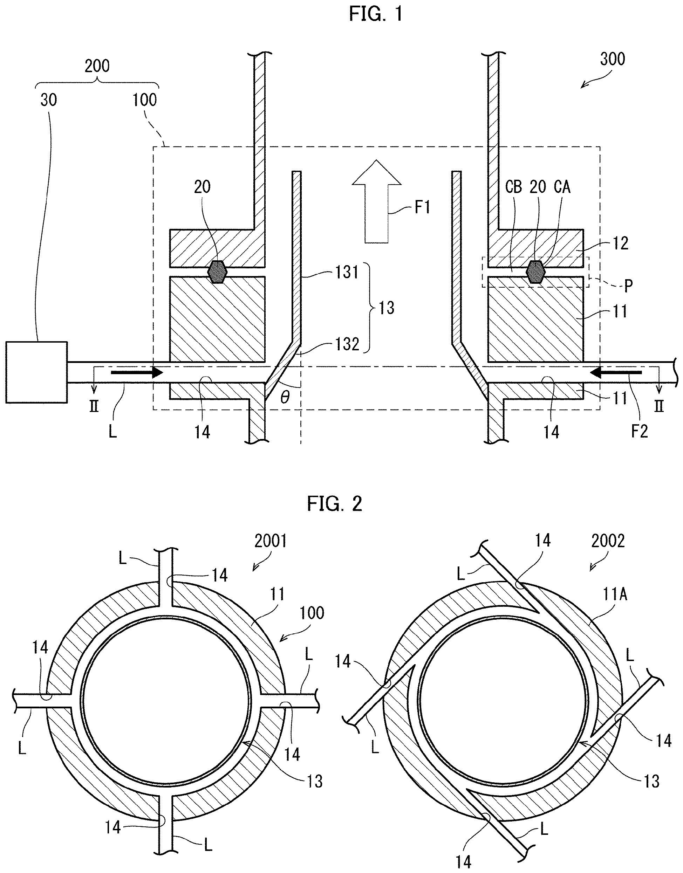

First, with reference to Figs. 1 and 2, described are a connection structure 100, a corrosion prevention system 200 which includes the connection structure 100, and a device 300 which includes the corrosion prevention system 200, in accordance with an aspect of the present disclosure. Fig. 1 is a schematic view illustrating configurations of the connection structure 100, the corrosion prevention system 200, and the device 300, in accordance with Embodiment 1. Note that Fig. 1 illustrates a cross section of the connection structure 100 which cross section is obtained by cutting the connection structure 100 along a plane parallel to a direction in which a corrosion induction fluid flows. 2001 of Fig. 2 is a cross-sectional view taken from line II-II of Fig. 1, and 2002 of Fig. 2 is a drawing illustrating a variation.

The corrosion prevention system 200 is a system for preventing corrosion in a connection part of the device 300 inside which the corrosion induction fluid flows. The corrosion prevention system 200 includes the connection structure 100 and a corrosion prevention fluid supply device 30.

In the present embodiment, an example in which the corrosion prevention system 200 is applied to the device 300 having a tubular structure is shown. The device 300 is an example of an apparatus in accordance with the present disclosure. The device 300 may be, for example, a reactor, a heat exchanger, or the like. The corrosion prevention system 200 can also be applied to piping inside which the corrosion induction fluid flows.

The corrosion prevention fluid supply device 30 is a device which supplies a corrosion prevention fluid to the connection structure 100. That is, the corrosion prevention fluid supply device 30 is an exemplary device for carrying out a step of supplying the corrosion prevention fluid in accordance with the present disclosure. The corrosion prevention fluid supply device 30 may be, for example, a device which includes a booster pump and piping L that connects the booster pump and the connection structure 100 and which supplies a pressurized liquid. Alternatively, the corrosion prevention fluid supply device 30 may be a device which includes a compressor and piping L that connects the compressor and the connection structure 100 and which supplies a compressed gas. The flow rate of the corrosion prevention fluid supplied from the corrosion prevention fluid supply device 30 is not particularly limited, but a higher flow rate makes it possible to further reduce a possibility that corrosion will occur in a connection part P. For example, the flow rate of the corrosion prevention fluid may be not less than a quarter of the flow rate of the corrosion induction fluid flowing in the device 300.

Note that a difference in temperature between the corrosion induction fluid flowing inside and the corrosion prevention fluid supplied by the corrosion prevention fluid supply device 30 is within 100°C, more preferably 80°C, and even more preferably 50°C. By the difference in temperature being within 100°C, more preferably 80°C, and even more preferably 50°C, it is possible to suppress thermal fatigue of the apparatus or the piping. In order to cause the difference in temperature to be within 100°C, more preferably 80°C, and even more preferably 50°C, the corrosion prevention system 200 may include a device which heats and/or cools the corrosion prevention fluid and/or the corrosion induction fluid.

The connection structure 100 is a part of the apparatus or the piping inside which a fluid flows, and is a structure that is located at a position at which members constituting the apparatus or the piping are connected to each other. Fig. 1 illustrates an example in which the connection structure 100 constitutes a part of the device 300. An arrow F1 illustrated in Fig. 1 indicates a direction in which the corrosion induction fluid flows in the device 300. An arrow F2 illustrated in Fig. 1 indicates a direction in which the corrosion prevention fluid is supplied. The configuration of the connection structure 100 will be described below in detail.

In this specification, the apparatus or the piping is made of metal, examples of which include various carbon steels, stainless steel, pure titanium, and hastelloy alloys. In this specification, the corrosion induction fluid is intended to mean a fluid which flows in the apparatus or the piping and which contains a corrosion induction substance that can cause corrosion in the apparatus or the piping. The corrosion induction substance is, for example, any of inorganic acids such as sulfuric acid and hydrochloric acid; inorganic bases such as sodium hydroxide; inorganic salts such as sodium sulfate and sodium hydrogen sulfate; chlorides; sulfides; and mixtures thereof, depending on a material of the apparatus or the piping. Alternatively, the corrosion induction substance may be any of organic acids such as acetic acid, formic acid, and butyric acid; organic bases such as pyridine and triethylamine; organic acid salts such as sodium acetate; and mixtures thereof.

In this specification, the corrosion prevention fluid is a fluid which is externally supplied so as to reduce a possibility that the apparatus or the piping will corrode. The corrosion prevention fluid is a fluid which is less likely to cause corrosion to the apparatus or the piping than the corrosion induction fluid. For example, the corrosion prevention fluid may be a fluid which contains water in a proportion of not less than 50% in terms of mass fraction or a fluid (gas) which contains nitrogen in a proportion of not less than 50% in terms of volume fraction. Alternatively, the corrosion prevention fluid may be a fluid which does not contain a corrosion induction substance.

The connection structure 100 and the corrosion prevention system 200 in accordance with the present embodiment are applicable to various apparatuses or piping inside which the corrosion induction fluid flows. In general, corrosion is likely to occur under a high-temperature or high-pressure condition, and it is desired to reduce occurrence of corrosion in an apparatus or piping used for a reaction in which a high-temperature and/or high-pressure condition(s) are required. The corrosion prevention system 200 in accordance with the present embodiment can be applied to, for example, a system in which the pressure of the corrosion induction fluid flowing inside is not less than 1 MPaG. Alternatively, the corrosion prevention system 200 can be applied to a system in which the temperature of the corrosion induction fluid flowing inside is not lower than 120°C.

### <Configuration of connection structure 100>

The connection structure 100 is applied to a connection part in the device 300 in which connection part a flange connection is used. The connection structure 100 includes a first flange 11, a second flange 12, a baffle plate 13, supply ports 14, and a sealing member 20. The first flange 11 and the second flange 12 sandwiches the sealing member 20 therebetween, and are connected to each other by being fastened with use of a bolt or the like (not illustrated). The connection part P means a part in which members constituting the device 300 are connected to each other. The connection part P includes a part in which the members constituting the device 300 are in contact with each other and a part in which the members and the sealing member 20 are in contact with each other. In Embodiment 1, the connection part P is a part in which the first flange 11 and the second flange 12 are connected to each other. The connection part P is an example of a connection part of the present disclosure.

Note that the connection part P can include a crevice. For example, a crevice CA illustrated in Fig. 1 is an ultra-micro crevice which can occur between the sealing member 20 and the first flange 11 and between the sealing member 20 and the second flange 12. A crevice CB is a micro crevice which can occur between the first flange 11 and the second flange 12. Note that Fig. 1 and the other drawings clearly illustrate the crevice CB for description, but the crevice CB is actually a micro crevice. That is, the connection part P can include the crevice CA and the crevice CB.

In the device 300, the first flange 11 is a flange that is provided on an upstream side with respect to a direction in which the corrosion induction fluid mainly flows. In the device 300, the second flange 12 is a flange that is provided on a downstream side with respect to the direction in which the corrosion induction fluid mainly flows.

The sealing member 20 is a member which is disposed between the first flange 11 and the second flange 12 so as to improve hermeticity in the connection part between the first flange 11 and the second flange 12. As the sealing member 20, a gasket or an O-ring can be, for example, used.

The supply ports 14 are through holes through which the corrosion prevention fluid externally supplied is supplied to the inside of the device 300. Fig. 1 illustrates an example in which the first flange 11 has the supply ports 14. As illustrated in 2001 of Fig. 2, the first flange 11 has four supply ports 14 which are arranged at substantially regular intervals in a circumferential direction. Each of the supply ports 14 is formed so as to pass through the first flange 11 in a radial direction of the device 300. The positions, number, directions, and the like of the supply ports 14 are not limited to the example illustrated in Fig. 1, provided that the supply ports 14 make it possible to supply the corrosion prevention fluid to the inside of the device 300. For example, the second flange 12 may have the supply ports 14, or alternatively both of the first flange 11 and the second flange 12 may have the supply ports 14. Note that an aspect in which the first flange 11, which is located on the upstream side, has the supply ports 14 makes it possible to further reduce a possibility that corrosion will occur in the connection part P.

The number of the supply ports 14 may be one or more, or two or more. The number of the supply ports 14 can be designed as desired, depending on the size or the like of the device 300. As the number of the supply ports 14 becomes larger, it is possible to further reduce a possibility that corrosion will occur in the connection part P. In a case where a plurality of supply ports 14 are formed, the plurality of supply ports make it possible to further reduce a possibility that corrosion will occur in the connection part P, by being arranged at substantially regular intervals in the circumferential direction. The supply ports 14 may be formed in a tangential direction of the inner circumference of the device 300, as in the example illustrated in 2002 in Fig. 2. By the supply ports 14 being formed in the tangential direction of the inner circumference, it is possible to reduce occurrence of an uneven flow of the corrosion prevention fluid in a space between the baffle plate 13 and an inner wall of the device 300.

The baffle plate 13 is a member which is located on the inner side of the device 300 and which causes a change in flow of each of the corrosion prevention fluid and the corrosion induction fluid. As illustrated in Fig. 1, the baffle plate 13 is disposed at a position at which the baffle plate 13 covers the supply ports 14 and the connection part P between the first flange 11 and the second flange 12. The baffle plate 13 has (i) a covering portion 131 which has a shape of a tube having an inner diameter smaller than the inner diameter of the device 300 and which extends along a flow path of the corrosion induction fluid and (ii) a connection portion 132 which connects an upstream-side end of the covering portion 131 and the inner surface of the device 300.

The covering portion 131 extends in the same direction as the direction in which the corrosion induction fluid flows, and thus makes it possible to further reduce a possibility that corrosion will occur in the connection part P. The covering portion 131 extends in a direction opposite to the direction of gravity, and thus makes it possible to further reduce a possibility that corrosion will occur in the connection part P. The length of the covering portion 131 is not particularly limited. However, as the covering portion 131 becomes longer, it is possible to further reduce a possibility that corrosion will occur in the connection part P. The distance between the covering portion 131 and the inner surface of the device 300 is not particularly limited. However, the distance is preferably shorter.

The distance between the covering portion 131 and the inner surface of the device 300 may be varied along a direction in which the covering portion 131 extends. With this configuration, it is possible to adjust a pressure loss in a space between the covering portion 131 and the inner surface of the device 300. Furthermore, it is possible to prevent the corrosion prevention fluid supplied from the supply ports 14 from passing through only a limited area in the space between the covering portion 131 and the inner surface of the device 300. As a method of varying the distance between the covering portion 131 and the inner surface of the device 300, for example, there is a method in which a baffle is provided to the covering portion 131. This makes it possible for the corrosion prevention fluid supplied from the supply ports 14 to spread throughout a wide area of the space between the covering portion 131 and the inner surface of the device 300, and possible to improve the effect of reducing entry of the corrosion induction fluid.

The connection portion 132 is connected to the inner surface of the device 300 on the upstream side of the connection part P and on the upstream side of the positions on the inner surface of the device 300 at which positions the supply ports 14 are open. The connection portion 132 is inclined such that a position at which the connection portion 132 and the covering portion 131 are connected to each other is located more inward and more downstream than a position at which the connection portion 132 and the inner surface of the device 300 are connected to each other. More specifically, as illustrated in Fig. 1, an angle θ formed by the connection portion 132 and the flow direction of the corrosion induction fluid is not less than 0° and less than 90°. For example, an angle θ formed by the connection portion 132 and the flow direction of the corrosion induction fluid may be less than 40°.

When the corrosion prevention fluid supplied from the supply ports 14 flows into the device 300, the corrosion prevention fluid impacts on the baffle plate 13 and/or the inner wall of the device 300. The corrosion prevention fluid which has flowed between the baffle plate 13 and the inner surface of the device 300 and whose flow direction has been changed by the baffle plate 13 flows between the inner surface of the device 300 and the baffle plate 13 and travels in the direction of the connection part P. On the other hand, the corrosion induction fluid flowing inside the device 300 impacts on the baffle plate 13, and the flow thereof is changed. A part of the corrosion induction fluid can flow between the baffle plate 13 and the inner surface of the device 300 from a downstream-side end of the baffle plate 13. However, the part is diluted by the corrosion prevention fluid flowing in from the supply ports 14. That is, the baffle plate 13 causes a change in flow of each of the corrosion prevention fluid and the corrosion induction fluid so that a fluid which comes in contact with the connection part P becomes the corrosion prevention fluid or the corrosion induction fluid that is diluted by the corrosion prevention fluid. Accordingly, the corrosion prevention system 200 including the baffle plate 13 is an example of a configuration for realizing the corrosion prevention method of the present disclosure.

### (Variation 1)

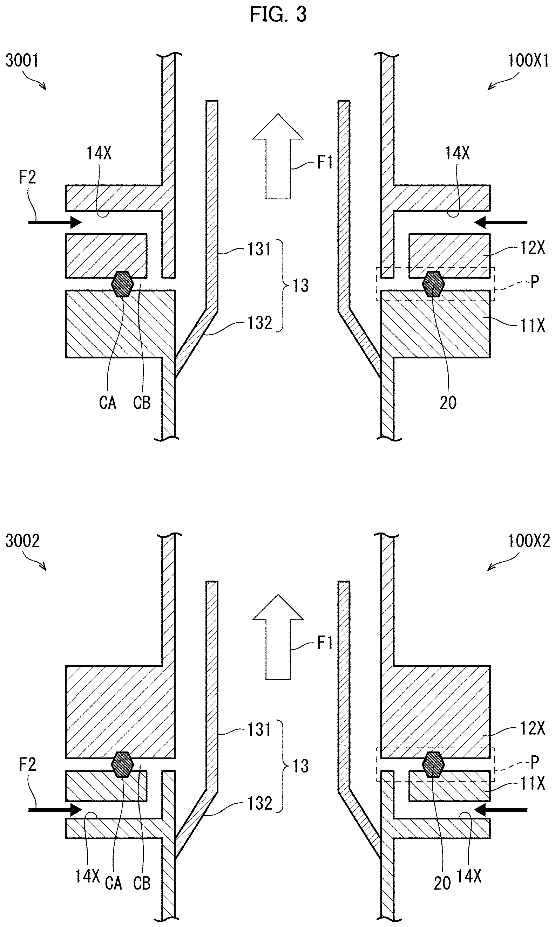

Fig. 3 is cross-sectional views of connection structures 100X1 and 100X2 which are variations of the connection structure 100 illustrated in Fig. 1. 3001 of Fig. 3 is a cross-sectional view of the connection structure 100X1, 3002 of Fig. 3 is a cross-sectional view of the connection structure 100X2. Members having the same functions as those of the members described with reference to Fig. 1 are given the same reference signs, and descriptions thereof will not be repeated. As illustrated in Fig. 3, each of the connection structures 100X1 and 100X2 includes a first flange 11X, a second flange 12X, a baffle plate 13, supply ports 14X, and a sealing member 20.

In the connection structure 100X1, the second flange 12X has the supply ports 14X. In the connection structure 100X2, the first flange 11X has the supply ports 14X. Openings of the supply ports 14X which openings are located on the inner side of an apparatus are formed with respect to a crevice CB between the sealing member 20 and the inner surface of the apparatus. A corrosion prevention fluid supplied from the supply ports 14X impacts on the first flange 11X or the second flange 12X. With this configuration, the corrosion prevention fluid is supplied to the inside of the device 300 via a position closer to a crevice CA.

Note that the supply ports 14X may be provided to both of the first flange 11X and the second flange 12X.

### <Summary of Embodiment 1>

A connection structure 100 prevents corrosion in a connection part of an apparatus (device 300) or piping inside which a corrosion induction fluid flows. The connection structure 100 includes: at least one supply port 14 through which a corrosion prevention fluid is supplied; and a baffle plate 13 which is located on the inner side of the apparatus or the piping. The baffle plate 13 causes a change in flow of each of the corrosion prevention fluid and the corrosion induction fluid so that a fluid which comes in contact with the connection part P becomes the corrosion prevention fluid or the corrosion induction fluid that is diluted by the corrosion prevention fluid.

With this configuration, it is possible to reduce a possibility that corrosion will occur in the connection part P. The connection part P is a part in which so-called crevice corrosion can occur. That is, with the configuration, it is possible to significantly reduce a possibility that crevice corrosion will occur.

In the connection structure 100, the baffle plate 13 is disposed at a position at which the baffle plate 13 covers the connection part P and the at least one supply port 14. The baffle plate 13 has a covering portion 131 which has a shape of a tube having an inner diameter smaller than the inner diameter of the apparatus or the piping in the connection part P and which extends along a direction in which the corrosion induction fluid flows.

With this configuration, the flow of each of the corrosion prevention fluid and the corrosion induction fluid is changed, and thus it is possible to cause the fluid which comes in contact with the connection part P to become the corrosion prevention fluid or the corrosion induction fluid that is diluted by the corrosion prevention fluid.

In the connection structure 100, the baffle plate 13 has, in addition to the covering portion 131, a connection portion 132 which connects one end of the covering portion 131 and the inner surface of the apparatus or the piping.

With this configuration, it is possible to connect the inner surface of the apparatus or the piping and the covering portion 131 without allowing the corrosion induction fluid to enter a space between the baffle plate 13 and the inner surface of the apparatus or the piping.

The connection structure 100 also includes (i) a first flange 11 which is located on an upstream side with respect to a direction in which the corrosion induction fluid flows and (ii) a second flange 12 which is located on a downstream side with respect to the direction in which the corrosion induction fluid flows. The at least one supply port 14 is formed in the first flange 11 and/or the second flange 12. The connection portion 132 is connected to the inner surface of the apparatus or the piping on the upstream side of the at least one supply port 14 and on the upstream side of the connection part P.

With this configuration, it is possible to cause the fluid which comes in contact with the connection part P to become the corrosion prevention fluid or the corrosion induction fluid that is diluted by the corrosion prevention fluid.

The corrosion prevention system 200 in accordance with the present embodiment includes the connection structure 100. This makes it possible to reduce, with use of the corrosion prevention system 200, a possibility that corrosion will occur in the connection part P.

A corrosion prevention method in accordance with the present embodiment is a method for preventing corrosion in a connection part of an apparatus or piping inside which a corrosion induction fluid flows. The corrosion prevention method includes the steps of: supplying a corrosion prevention fluid; and changing a flow of each of the corrosion prevention fluid and the corrosion prevention fluid so that a fluid which comes in contact with a connection part P becomes the corrosion prevention fluid or the corrosion induction fluid that is diluted by the corrosion prevention fluid.

With this configuration, it is possible to reduce a possibility that corrosion will occur in the connection part P.

In the corrosion prevention method in accordance with the present embodiment, the above-described corrosion prevention system 200 is used. With use of the corrosion prevention system 200, it is possible to reduce a possibility that corrosion will occur in the connection part P.

In the corrosion prevention method in accordance with the present embodiment, the corrosion induction fluid has a pressure of not less than 1 MPaG in the apparatus or the piping. This makes it possible to reduce a possibility that corrosion will occur in the connection part P under a high-pressure condition.

In the corrosion prevention method in accordance with the present embodiment, the corrosion induction fluid has a temperature of not lower than 120°C in the apparatus or the piping. This makes it possible to reduce a possibility that corrosion will occur in the connection part P under a high-temperature condition.

In the corrosion prevention method in accordance with the present embodiment, the corrosion prevention fluid may be a fluid which contains water in a proportion of not less than 50% in terms of mass fraction or a fluid which contains nitrogen in a proportion of not less than 50% in terms of volume fraction. Water or nitrogen is a substance which is extremely unlikely to cause corrosion in an apparatus or piping. With this configuration, it is possible to significantly reduce a possibility that corrosion will occur in the connection part P.

### Embodiment 2

The following description will discuss another embodiment of the present invention. Note that, for convenience, members having the same functions as those of the members described in the above embodiment are given the same reference signs, and descriptions thereof will not be repeated. The same is true for embodiments below.

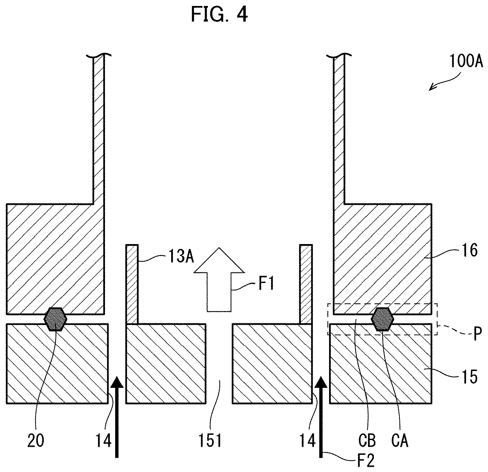

Fig. 4 is a cross-sectional view of a connection structure 100A in accordance with Embodiment 2. The connection structure 100A differs from Embodiment 1 in that the connection structure 100A is located at a position at which members are connected to each other at an end of an apparatus or piping.

The connection structure 100A includes an end flange 15, a third flange 16 which is connected to the end flange 15, a baffle plate 13A, supply ports 14, and a sealing member 20. The end flange 15 and the third flange 16 sandwiches the sealing member 20 therebetween, and are connected to each other by being fastened with use of a bolt or the like (not illustrated). In Embodiment 2, a connection part P is a part in which the end flange 15 and the third flange 16 are connected to each other.

The end flange 15 is a flange used at the end of the apparatus or the piping. In Fig. 3, the end flange 15 is provided with a corrosion induction fluid supply port 151 through which a corrosion induction fluid is supplied. However, a supply port for the corrosion induction fluid may be provided to the third flange 16, or may be alternatively provided at any position, other than the end flange 15 and the third flange 16, on the apparatus or the piping.

The baffle plate 13A covers the connection part P, has a shape of a tube having an inner diameter smaller than the inner diameter of the apparatus or the piping, and extends toward the inside of the apparatus or the piping from the end flange 15.

The supply ports 14 are formed in the end flange 15 so as to pass through (i) the outside of the apparatus or the piping and (ii) a gap between the baffle plate 13A and the inner surface of the apparatus or the piping. Openings of the supply ports 14 which openings are located on the outer side of the apparatus may be formed in an end surface of the apparatus or may be formed in a side surface of the end flange 15.

With this configuration, it is possible to reduce a possibility that corrosion will occur in the connection part P. The connection part P is a part in which so-called crevice corrosion can occur. That is, with the configuration, it is possible to significantly reduce a possibility that crevice corrosion will occur.

### (Variation 2-1)

In the connection structure 100A, the supply ports 14 may be formed in the third flange 16. In this case, the baffle plate 13A has a shape of a tube having an inner diameter smaller than the inner diameter of the apparatus or the piping, and extends toward the inside of the apparatus or the piping from the end flange 15 so as to cover the supply ports 14.

Even with this configuration, it is possible to reduce a possibility that corrosion will occur in the connection part P.

### (Variation 2-2)

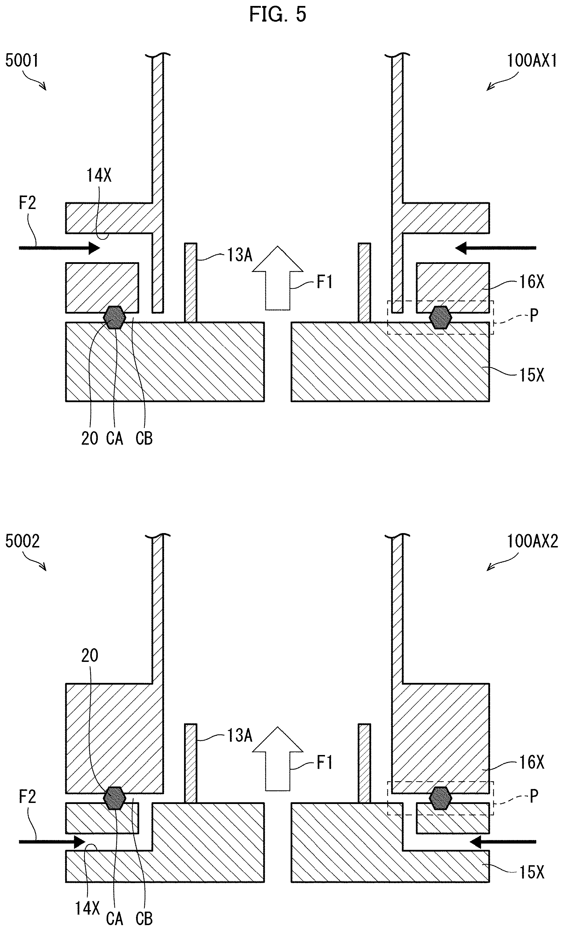

Fig. 5 is cross-sectional views of connection structures 100AX1 and 100AX2 which are variations of the connection structure 100A illustrated in Fig. 4. 5001 of Fig. 5 is a cross-sectional view of the connection structure 100AX1, 5002 of Fig. 5 is a cross-sectional view of the connection structure 100AX2. As illustrated in Fig. 5, each of the connection structures 100AX1 and 100AX2 includes an end flange 15X, a third flange 16X which is connected to the end flange 15X, a baffle plate 13A, supply ports 14X, and a sealing member 20.

In the connection structure 100AX1, the third flange 16X has the supply ports 14X. On the other hand, in the connection structure 100AX2, the end flange 15X has the supply ports 14X. Openings of the supply ports 14X which openings are located on the inner side of an apparatus are formed with respect to a crevice CB between the sealing member 20 and the inner surface of the apparatus. A corrosion prevention fluid supplied from the supply ports 14X impacts on the third flange 16X or the end flange 15X. With this configuration, the corrosion prevention fluid is supplied to the inside of the device 300 via a position closer to a crevice CA.

Note that the supply ports 14X may be provided to both of the third flange 16X and the end flange 15X.

### Embodiment 3

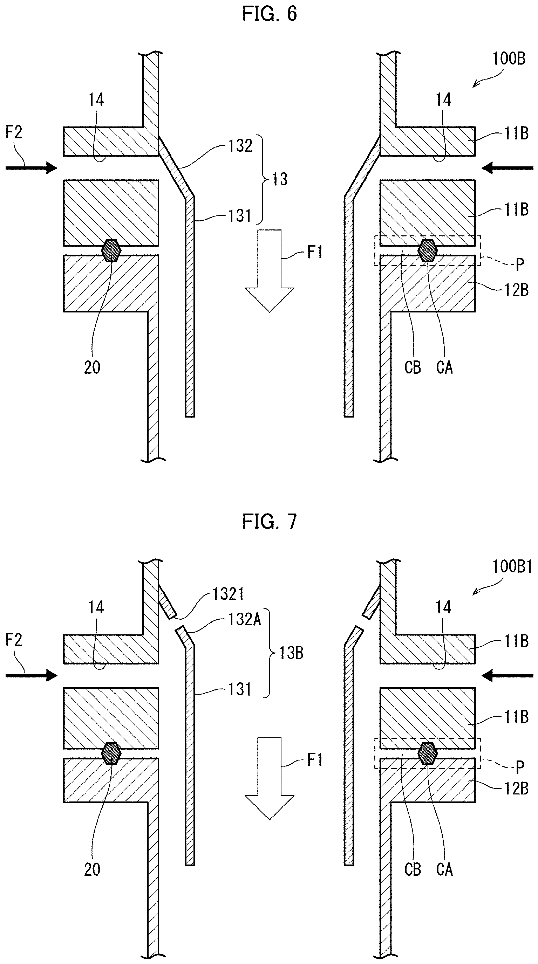

In Embodiment 3, described with reference to Figs. 6 and 7 is an aspect which can be suitably applied to a case where the direction of a corrosion induction fluid flowing in an apparatus or piping is the direction of gravity.

Fig. 6 is a cross-sectional view of a connection structure 100B in accordance with Embodiment 3. As illustrated in Fig. 6, the connection structure 100B includes a first flange 11B, a second flange 12B, a baffle plate 13, supply ports 14, and a sealing member 20. Fig. 6 illustrates an example in which the first flange 11 B has the supply ports 14. However, the second flange 12B may have the supply ports 14, or alternatively both of the first flange 11B and the second flange 12B may have the supply ports 14.

In a case where the direction of the corrosion induction fluid flowing in the apparatus or the piping is the direction of gravity, air bubbles generated in the apparatus or the piping may enter a space between the baffle plate 13 and the inner surface of the apparatus or the piping. Even with this configuration, a fluid which comes in contact with a connection part P becomes a corrosion prevention fluid or the corrosion induction fluid that is diluted by the corrosion prevention fluid, because the baffle plate 13 is provided. Thus, it is possible to reduce a possibility that corrosion will occur in the connection part.

Fig. 7 is a cross-sectional view of a connection structure 100B1 which is a variation of the connection structure 100B. The connection structure 100B1 has a baffle plate 13B, instead of the baffle plate 13. A connection portion 132A of the baffle plate 13B has through holes 1321 through which air bubbles are bled. A plurality of through holes 1321 may be formed in the connection portion 132A. By the baffle plate 13B having the through holes 1321, it is possible to reduce a possibility that air bubbles are accumulated and prevent entry of a corrosion prevention fluid from the supply ports 14. It is also possible to prevent accumulation of a gas which induces corrosion, such as sulfur dioxide gas or ammonia.

### Embodiment 4

In Embodiment 4, described with reference to Fig. 8 is an aspect which can be suitably applied to a case where the direction of a corrosion induction fluid flowing in an apparatus or piping is opposite from that in Embodiment 1 illustrated in Fig. 1. Fig. 8 is a cross-sectional view of a connection structure 100C in accordance with Embodiment 4. As illustrated in Fig. 8, the connection structure 100C includes a first flange 11C, a second flange 12C, a baffle plate 13C, supply ports 14, and a sealing member 20. The supply ports 14 are provided to the second flange 12C.

As illustrated in Fig. 8, in a case where the direction of the corrosion induction fluid flowing in the apparatus or the piping is opposite from a direction in which a corrosion prevention fluid flows in the apparatus or the piping, the corrosion induction fluid is likely to enter a space between the baffle plate 13C and the inner surface of the apparatus or the piping.

As illustrated in Fig. 8, a covering portion 131A of the baffle plate 13C extends parallel to the direction in which the corrosion induction fluid flows and longer than the covering portion 131 of Embodiment 1. In other words, the distance between a connection part P and an end of the covering portion 131A which end is located on an opposite side from a connection portion 132 side is longer than that in the example described in Embodiment 1. This causes a fluid which comes in contact with the connection part P to become the corrosion prevention fluid or the corrosion induction fluid that is sufficiently diluted by the corrosion prevention fluid. Thus, it is possible to reduce a possibility that corrosion will occur in the connection part.

### Embodiment 5

In Embodiment 5, an exemplary aspect of an apparatus or piping including a connection structure 100D is described. 9001 of Fig. 9 is a partial cross-sectional view of an apparatus including the connection structure 100D in accordance with Embodiment 5. 9002 of Fig. 9 is a partial cross-sectional view of an apparatus including a connection structure 100E which is a variation of the connection structure 100D. Each of the apparatuses illustrated in Fig. 9 is a tubular apparatus, and a fluid flowing inside the apparatus is a corrosion induction fluid.

The connection structure 100D illustrated in 9001 includes a first flange 11D, a second flange 12D, a baffle plate 13D, supply ports 14, and a sealing member 20. The first flange 11D is provided to a main body part of a reactor. The second flange 12D is provided to a lid part of the reactor. The first flange 11D and the second flange 12D sandwiches the sealing member 20 therebetween, and are connected to each other by being fastened with use of a bolt or the like (not illustrated).

The baffle plate 13D is located on an inner side of the reactor, and causes a change in flow of each of a corrosion prevention fluid and the corrosion induction fluid. The baffle plate 13D is disposed at a position at which the baffle plate 13D covers the supply ports 14 and a connection part P between the first flange 11D and the second flange 12D. The baffle plate 13D includes a covering portion 131D, a connection portion 132D, and a flow rectification portion 133D. The covering portion 131D has a shape of a tube having an inner diameter smaller than the inner diameter of the reactor, and extends along the inner surface of the reactor. The connection portion 132D connects the inner surface of the reactor and an end of the covering portion 131D which end is located on an upper side of the reactor. The flow rectification portion 133D is a member for further changing the direction of the flow of the corrosion prevention fluid. The flow rectification portion 133D is a donut- and plate-shaped member. The outer edge of the flow rectification portion 133D is connected to the inner surface of the reactor. The inner edge of the flow rectification portion 133D is located at a position at which the inner edge overlaps the covering portion 131D or located more inward than the covering portion 131D, as viewed from above. By the baffle plate 13D having the flow rectification portion 133D, it is possible to change the flow of the corrosion prevention fluid so that the corrosion prevention fluid mainly flows in a radial direction, and possible to reduce entry of the corrosion induction fluid into a space between the baffle plate 13D and the inner surface of the apparatus or the piping.

With this configuration, it is possible to change the flow of each of the corrosion prevention fluid and the corrosion induction fluid so that a fluid which comes in contact with the connection part P becomes the corrosion prevention fluid or the corrosion induction fluid that is diluted by the corrosion prevention fluid. This makes it possible to reduce a possibility that corrosion will occur in the connection part P. Furthermore, it is possible to reduce a possibility that crevice corrosion will occur in the connection part P.

The connection structure 100E illustrated in 9002 differs from the connection structure 100D in that the connection structure 100E includes a baffle plate 13E instead of the baffle plate 13D. The baffle plate 13E includes a covering portion 131E, a connection portion 132E, and a flow rectification portion 133E. The configurations of the covering portion 131E and the connection portion 132E are similar to the respective configurations of the covering portion 131D and the connection portion 132D. The flow rectification portion 133E differs from the flow rectification portion 133D in that the inner edge of the flow rectification portion 133E is located more outward than the covering portion 131E, as viewed from above. By the baffle plate 13E having the flow rectification portion 133E, it is possible to change a flow of a corrosion prevention fluid so that the corrosion prevention fluid mainly flows downward, and possible to reduce entry of the corrosion induction fluid into a space between the baffle plate 13E and the inner surface of the apparatus or piping.

Even with this configuration, it is possible to bring about an effect similar to that brought about by the connection structure 100D.

### Embodiment 6

In Embodiment 6, an exemplary aspect of an apparatus or piping including a connection structure 100F is described. Fig. 10 is a partial cross-sectional view of an apparatus including the connection structure 100F in accordance with Embodiment 6. The apparatus illustrated in Fig. 10 is a tubular apparatus, and a fluid flowing inside the apparatus is a liquid corrosion induction fluid. In the present embodiment, a gaseous fluid can be suitably used as a corrosion prevention fluid. For example, the corrosion prevention fluid in the present embodiment may be nitrogen gas.

As illustrated in Fig. 10, the connection structure 100F includes a first flange 11F, a second flange 12F, a baffle plate 13F, supply ports 14, and a sealing member 20. The first flange 11F is provided on a downstream side (lower side) of the apparatus. The second flange 12F is provided on an upstream side (upper side) of the apparatus. The first flange 11F and the second flange 12F sandwiches the sealing member 20 therebetween, and are connected to each other by being fastened with use of a bolt or the like (not illustrated).

The baffle plate 13F is located on the inner side of the apparatus, and causes a change in flow of each of the corrosion prevention fluid and the corrosion induction fluid. The baffle plate 13F is disposed at a position at which the baffle plate 13F covers the supply ports 14 and a connection part P between the first flange 11F and the second flange 12F. The baffle plate 13F includes a covering portion 131F, a connection portion 132F, a flow rectification portion 133F, and a second flow rectification portion 134F.

The covering portion 131F has a shape of a tube having an inner diameter smaller than the inner diameter of the apparatus, and extends along the inner surface of the apparatus. The connection portion 132F connects the inner surface of the apparatus and an end of the covering portion 131F which end is located on the upper side of a reactor.

The flow rectification portion 133F is a member for further changing the direction of the flow of the corrosion prevention fluid. The flow rectification portion 133F has a first portion 1331 and a second portion 1332. The first portion 1331 has a shape of a tube having an inner diameter smaller than the inner diameter of the apparatus and greater than the inner diameter of the covering portion 131F, and extends along the inner surface of the apparatus. The length of the first portion 1331 in the vertical direction is shorter than the length of the covering portion 131F in the vertical direction. The second portion 1332 connects the inner surface of the apparatus and an end of the first portion 1331 which end is located on the lower side of the apparatus. By the baffle plate 13F having the flow rectification portion 133F, it is possible to reduce entry of the corrosion induction fluid in the direction of the connection part P, as compared with a case where the flow rectification portion 133F is not provided.

The second flow rectification portion 134F is a member which mainly causes a change in flow of the corrosion induction fluid and air bubbles contained in the corrosion induction fluid. The second flow rectification portion 134F is a donut- and plate-shaped member. The outer edge of the second flow rectification portion 134F is connected to the inner surface of the apparatus. The inner edge of the second flow rectification portion 134F is located more inward than the covering portion 131F, as viewed from above. The second flow rectification portion 134F is inclined toward the upper side of the apparatus. By the baffle plate 13F having the second flow rectification portion 134F, it is possible to reduce a possibility that air bubbles will enter a space between the baffle plate 13F and the inner surface of the apparatus and the corrosion induction fluid will adhere to the connection part P as a droplet.

In the connection structure 100F, it is possible to change the flow of each of the corrosion prevention fluid and the corrosion induction fluid so that a fluid which comes in contact with the connection part P becomes the corrosion prevention fluid or the corrosion induction fluid that is diluted by the corrosion prevention fluid. This makes it possible to reduce a possibility that corrosion will occur in the connection part P. Furthermore, it is possible to reduce a possibility that crevice corrosion will occur in the connection part P.

### Embodiment 7

In Embodiment 7, an exemplary aspect of an apparatus or piping including a connection structure 100G is described. Fig. 11 is a partial cross-sectional view of an apparatus including the connection structure 100G in accordance with Embodiment 7. The apparatus illustrated in Fig. 11 is a tubular apparatus, and a fluid flowing inside the apparatus is a corrosion induction fluid.

As illustrated in Fig. 11, the connection structure 100G includes a first flange 11G, a second flange 12G, a baffle plate 13G, supply ports 14, and a sealing member 20. The first flange 11G is provided to a main body part of the apparatus. In the connection structure 100G, both of the first flange 11G and the second flange 12 have the supply ports 14. However, the supply ports 14 may be provided to one of the first flange 11G and the second flange 12.

Even with this configuration, it is possible to reduce a possibility that crevice corrosion will occur in a connection part P.

### Embodiment 8

In Embodiment 8, an exemplary aspect of an apparatus or piping including a connection structure 100H is described. Fig. 12 is a partial cross-sectional view of an apparatus including the connection structure 100H in accordance with Embodiment 8. The apparatus illustrated in Fig. 12 is a tubular apparatus, and a fluid flowing inside the apparatus is a corrosion induction fluid. Fig. 13 is a cross-sectional view taken from line XI-XI in Fig. 12.

As illustrated in Figs. 12 and 13, the connection structure 100H includes a first flange 11H, a second flange 12H, a baffle plate 13H, a supply port 14, and a sealing member 20. The supply port 14 is provided at any one position in the second flange 12H. Note that the supply port 14 may be provided to the first flange 11H. The baffle plate 13H has a flow path end portion 135 and a flow path portion 136. The flow path end portion 135 is provided in the vicinity of the supply port 14, and closes one end of the flow path portion 136 by connecting the flow path portion 136 and the inner surface of the apparatus. The flow path portion 136 forms a flow path of a corrosion prevention fluid supplied from the supply port 14. The flow path portion 136 is a hollow path which extends along a connection part P from the flow path end portion 135, and covers the connection part P and the supply port 14. The other end of the flow path portion 136 is located more inward than the flow path end portion 135. The corrosion prevention fluid flows into the inside of the apparatus from a gap between the other end of the flow path portion 136 and the flow path end portion 135.

Even with this configuration, it is possible to reduce a possibility that crevice corrosion will occur in the connection part P.

### Embodiment 9

In Embodiment 9, an exemplary aspect of an apparatus or piping including a connection structure 100I is described. Fig. 14 is a partial cross-sectional view of an apparatus including the connection structure 100I in accordance with Embodiment 9. The apparatus illustrated in Fig. 14 is a tubular apparatus, and a fluid flowing inside the apparatus is a corrosion induction fluid.

As illustrated in Fig. 14, the connection structure 100I includes a first flange 11I, a second flange 12I, a baffle plate 13I, supply ports 14, and a sealing member 20.

The inner diameter of the apparatus illustrated in Fig. 14 varies between the upstream side and downstream side of the first flange 11I. The inner diameter of the apparatus on the upstream side of the first flange 11I is smaller than the inner diameter of the apparatus on the downstream side of the first flange 11I. This configuration can be realized by the first flange 11I having a step which causes a change in inner diameter of the apparatus, for example, as illustrated in Fig. 14.

In this case, the baffle plate 13 may be constituted by a covering portion 131 which extends from a step surface of the first flange 11I. A surface of the covering portion 131 which surface is located on an inner surface side of the apparatus may be flush with the inner surface of the apparatus which inner surface is located upstream of the first flange 11I. By the surface of the covering portion 131 which surface is located on the inner surface side of the apparatus being flush with the inner surface of the apparatus which inner surface is located upstream of the first flange 11I, it is possible to reduce a pressure loss occurring in the vicinity of the covering portion 131. Furthermore, processing at the time of production of a device is facilitated.

That is, in the connection structure 100I, the baffle plate 13 is disposed at a position at which the baffle plate 13 covers a connection part P and the supply ports 14. The baffle plate 13 has the covering portion 131 which has a shape of a tube having an inner diameter smaller than the inner diameter of the apparatus or the piping in the connection part P and which extends along a direction in which the corrosion induction fluid flows.

With this configuration, a flow of each of a corrosion prevention fluid and the corrosion induction fluid is changed, and thus it is possible to cause a fluid which comes in contact with the connection part P to become the corrosion prevention fluid or the corrosion induction fluid that is diluted by the corrosion prevention fluid. Thus, it is possible to reduce a possibility that crevice corrosion will occur in the connection part P.

### (Summary of embodiments)

(1) A connection structure in accordance with a first aspect of the present invention is a connection structure which prevents corrosion in a connection part of an apparatus or piping inside which a corrosion induction fluid flows, including: at least one supply port through which a corrosion prevention fluid is supplied; and a baffle plate which is located on an inner side of the apparatus or the piping, wherein the baffle plate causes a change in flow of each of the corrosion prevention fluid and the corrosion induction fluid so that a fluid which comes in contact with the connection part becomes the corrosion prevention fluid or the corrosion induction fluid that is diluted by the corrosion prevention fluid.
(2) The connection structure in accordance with a second aspect of the present invention is arranged such that, in the first aspect, the baffle plate is disposed at a position at which the baffle plate covers the connection part and the at least one supply port, and the baffle plate has a covering portion which has a shape of a tube having an inner diameter smaller than an inner diameter of the apparatus or the piping in the connection part and which extends along a direction in which the corrosion induction fluid flows.
(3) The connection structure in accordance with a third aspect of the present invention is arranged such that, in the second aspect, the baffle plate has a connection portion which connects one end of the covering portion and an inner surface of the apparatus or the piping.
(4) The connection structure in accordance with a fourth aspect of the present invention is arranged so as to, in the third aspect, further include: a first flange which is located on an upstream side with respect to the direction in which the corrosion induction fluid flows; and a second flange which is located on a downstream side with respect to the direction in which the corrosion induction fluid flows, wherein the at least one supply port is formed in the first flange and/or the second flange, and the connection portion is connected to the inner surface of the apparatus or the piping, on an upstream side of the at least one supply port and on an upstream side of the connection part.
(5) The connection structure in accordance with a fifth aspect of the present invention is arranged so as to, in the first aspect, further include: an end flange which is located at an end of the apparatus or the piping; and a third flange which is connected to the end flange, wherein the baffle plate covers the connection part, has a shape of a tube having an inner diameter smaller than an inner diameter of the apparatus or the piping, and extends toward an inside of the apparatus or the piping from the end flange, and the at least one supply port is formed in the end flange so as to pass through (i) an outside of the apparatus or the piping and (ii) a gap between the baffle plate and an inner surface of the apparatus or the piping.
(6) A corrosion prevention system in accordance with a sixth aspect of the present invention includes a connection structure described in any one of the first through fifth aspects and a corrosion prevention fluid supply device.
(7) A device in accordance with a seventh aspect of the present invention include a corrosion prevention system described in the sixth aspect.
(8) A corrosion prevention method in accordance with an eighth aspect of the present invention is a method for preventing corrosion in a connection part of an apparatus or piping inside which a corrosion induction fluid flows, including the steps of: supplying a corrosion prevention fluid; and changing a flow of each of the corrosion prevention fluid and the corrosion prevention fluid so that a fluid which comes in contact with the connection part becomes the corrosion prevention fluid or the corrosion induction fluid that is diluted by the corrosion prevention fluid.
(9) The method in accordance with a ninth aspect of the present invention is arranged such that, in the eighth aspect, in the step of changing the flow of the corrosion prevention fluid, a corrosion prevention system described in the sixth aspect is used.
(10) The method in accordance with a tenth aspect of the present invention is arranged such that, in the eighth or ninth aspect, the corrosion induction fluid has a pressure of not less than 1 MPaG in the apparatus or the piping.
(11) The method in accordance with an eleventh aspect of the present invention is arranged such that, in any one of the eighth through tenth aspects, the corrosion induction fluid has a temperature of not lower than 120°C in the apparatus or the piping.
(12) The method in accordance with a twelfth aspect of the present invention is arranged such that, in any one of the eighth through eleventh aspects, the corrosion prevention fluid is a fluid which contains water in a proportion of not less than 50% in terms of mass fraction or a fluid which contains nitrogen in a proportion of not less than 50% in terms of volume fraction.

The present invention is not limited to the embodiments, but can be altered by a skilled person in the art within the scope of the claims. The present invention also encompasses, in its technical scope, any embodiment derived by combining technical means disclosed in differing embodiments.

### Examples

### (Verification test by simulation)

The following description will discuss a result obtained by carrying out a simulation with regard to an example having a configuration falling within the scope of the present invention.

In this simulation, verified was an effect of dilution of the corrosion induction fluid in the connection part P in a case where the corrosion prevention system 200 described in Embodiment 1 and illustrated in Fig. 1 was used. The simulation was carried out with use of a two-fluid model. Details of the two-fluid model are described in ISHII, Mamoru; HIBIKI, Takashi. Thermo-fluid dynamics of two-phase flow. Springer Science & Business Media, 2010.

### Analysis conditions are as follows.

• In the direction indicated by the arrow F1 in Fig. 1, 600 ml/h of the corrosion induction fluid and 61.5 g/h of air were caused to flow.
• The corrosion induction fluid in the device 300 had the following physical properties: a density of 990 kg/m³; and a viscosity of 1.69×10⁻⁴.
. The corrosion prevention fluid in the device 300 had the following physical properties: a density of 866 kg/m³; and a viscosity of 1.3 × 10⁻⁴.
• The air in the device 300 had the following physical properties: a density of 48.5 kg/m³; and a viscosity of 6.7 × 10⁻⁴.

Note that the physical properties of the above fluids were premised on the condition that the corrosion prevention fluid was water and the device 300 had a temperature of 200°C and a pressure of 7 MPaG therein.

As a result of carrying out the simulation under the above conditions, a fluid existing between the baffle plate 13 and the inner surface of the device 300 was a fluid in which the corrosion induction fluid was diluted to not more than 1%. That is, with use of the corrosion prevention system 200 in accordance with an aspect of the present invention, it was possible to obtain a simulation result that a fluid which came in contact with the connection part P was the corrosion prevention fluid or the corrosion induction fluid that was sufficiently diluted by the corrosion prevention fluid.

### [Corrosion test]

A result of an experiment on a corrosion prevention effect by a rate of dilution of the corrosion induction fluid will be described below. In this corrosion test, a Ti test piece was used as an example of a material used for the apparatus or the piping. As an example of the corrosion induction fluid, a corrosive liquid which caused crevice corrosion to Ti at 200°C was used. By bringing a Ti washer into close contact with the Ti test piece, a model part of the connection part P was prepared.

The Ti test piece having the model part was immersed in a stock solution of the corrosive liquid, contained in a pressure vessel, and heated at 220°C and 3 MPaG for 20 hours in the presence of air. Similarly, a diluent obtained by diluting the corrosive liquid to 1% was heated at 220°C and 3 MPaG for 20 hours in the presence of air.

In the Ti test piece which had been immersed in the stock solution of the corrosive liquid, occurrence of corrosion was observed in the model part. On the contrary, in the Ti test piece which had been immersed in the diluent obtained by diluting the corrosive liquid to 1%, occurrence of corrosion was not observed in the model part.

It was verified, by this test, that it was possible to significantly reduce occurrence of corrosion by diluting, to 1%, the corrosion induction fluid which could cause corrosion.

From the verification test by the simulation described above and the result of the corrosion test, the following can be said. That is, the corrosion prevention system 200 in accordance with an aspect of the present invention, which enables a fluid that comes in contact with the connection part P to become the corrosion prevention fluid or the corrosion induction fluid which is diluted to not more than 1% by the corrosion prevention fluid, makes it possible to significantly reduce occurrence of corrosion in the connection part P.

### Reference Signs List

100, 100A, 100B, 100B1, 100C, 100D, 100E, 100F, 100G, 100H, 100I ... Connection structure
11, 11B, 11C, 11D, 11F, 11G, 11H, 11I ... First flange 12, 12B, 12C, 12D, 12F, 12G, 12H, 12I ... Second flange 13, 13A, 13B, 13C, 13D, 13E, 13F, 13G, 13H ... Baffle plate 14 ... Supply port
15 ... End flange
16 ... Third flange
20 ... Sealing member
30 ... Corrosion prevention fluid supply device 131, 131A, 131D, 131E, 131F ... Covering portion 132, 132A, 132D, 132E, 132F ... Connection portion 200 ... Corrosion prevention system
300 ... Device (apparatus)

## Claims

1. A connection structure which prevents corrosion in a connection part of an apparatus or piping inside which a corrosion induction fluid flows, comprising:
at least one supply port through which a corrosion prevention fluid is supplied; and
a baffle plate which is located on an inner side of the apparatus or the piping, wherein
the baffle plate causes a change in flow of each of the corrosion prevention fluid and the corrosion induction fluid so that a fluid which comes in contact with the connection part becomes the corrosion prevention fluid or the corrosion induction fluid that is diluted by the corrosion prevention fluid.

2. The connection structure as set forth in claim 1, wherein
the baffle plate is disposed at a position at which the baffle plate covers the connection part and the at least one supply port, and
the baffle plate has a covering portion which has a shape of a tube having an inner diameter smaller than an inner diameter of the apparatus or the piping in the connection part and which extends along a direction in which the corrosion induction fluid flows.

3. The connection structure as set forth in claim 2, wherein
the baffle plate has a connection portion which connects one end of the covering portion and an inner surface of the apparatus or the piping.

4. The connection structure as set forth in claim 3, further comprising:
a first flange which is located on an upstream side with respect to the direction in which the corrosion induction fluid flows; and
a second flange which is located on a downstream side with respect to the direction in which the corrosion induction fluid flows, wherein
the at least one supply port is formed in the first flange and/or the second flange, and
the connection portion is connected to the inner surface of the apparatus or the piping, on an upstream side of the at least one supply port and on an upstream side of the connection part.

5. The connection structure as set forth in claim 1, further comprising:
an end flange which is located at an end of the apparatus or the piping; and
a third flange which is connected to the end flange, wherein
the baffle plate covers the connection part, has a shape of a tube having an inner diameter smaller than an inner diameter of the apparatus or the piping, and extends toward an inside of the apparatus or the piping from the end flange, and
the at least one supply port is formed in the end flange so as to pass through (i) an outside of the apparatus or the piping and (ii) a gap between the baffle plate and an inner surface of the apparatus or the piping.

6. A corrosion prevention system comprising a connection structure recited in any one of claims 1 through 5 and a corrosion prevention fluid supply device.

7. A device comprising a corrosion prevention system recited in claim 6.

8. A method for preventing corrosion in a connection part of an apparatus or piping inside which a corrosion induction fluid flows, comprising the steps of:
supplying a corrosion prevention fluid; and
changing a flow of each of the corrosion prevention fluid and the corrosion prevention fluid so that a fluid which comes in contact with the connection part becomes the corrosion prevention fluid or the corrosion induction fluid that is diluted by the corrosion prevention fluid.

9. The method as set forth in claim 8, wherein, in the step of changing the flow of the corrosion prevention fluid, a corrosion prevention system recited in claim 6 is used.

10. The method as set forth in claim 8, wherein the corrosion induction fluid has a pressure of not less than 1 MPaG in the apparatus or the piping.

11. The method as set forth in claim 8, wherein the corrosion induction fluid has a temperature of not lower than 120°C in the apparatus or the piping.

12. The method as set forth in claim 8, wherein the corrosion prevention fluid is a fluid which contains water in a proportion of not less than 50% in terms of mass fraction or a fluid which contains nitrogen in a proportion of not less than 50% in terms of volume fraction.
